# EUROPEAN PATENT APPLICATION

(11) **EP 3 621 004 A1**
(43) Date of publication of application: **11.03.2020**
(21) Application number: 19186269.7
(22) Date of filing: 15.07.2019
(51) Int. Cl.: G06Q 10/06

(54) **SERVICE REQUIREMENT MATCHING SUB-SYSTEM AND RELATED COMPUTER PROGRAM PRODUCT**

(30) Priority: 06.09.2018 CN 201811038324
(71) Applicant: GHS Advanced Inc., Taipei City 110 (TW)
(72) Inventor: KUNG, Wen-Kai, 325 Taoyuan City (TW)
(74) Representative: Viering, Jentschura & Partner mbB Patent- und Rechtsanwälte

(57) **Abstract**

A service requirement matching sub-system (110) is disclosed including: a communication circuit (111); a database (113); and a processing circuit (119), for conducting following operations: receiving requirement conditions transmitted from a target client device (120), and generating a corresponding target reservation order; configuring an initial value of candidate count corresponding to the target reservation order; searching the database (113) for multiple qualified service providers matching the requirement conditions; utilizing the communication circuit (111) to transmit the target reservation order and the initial value of candidate count to service-provider devices (140, 150) corresponding to the multiple qualified service providers, but not to service-provider devices (160) corresponding to other users who do not match the requirement conditions; and when receiving a candidate request, utilizing the communication circuit (111) to transmit a current candidate count of the target reservation order to the service-provider devices (140, 150) corresponding to the multiple qualified service providers.

## Description

The present invention relates to a service requirement matching sub-system and related computer program product as defined in independent claims 1 and 8.

As the social division of labor becomes more and more complex and specialized, it is required to hire other persons to deal with a lot of tasks so that these tasks can be well handled. However, the information collecting capability of most service requesters and service providers is insufficient, and also there exists high information asymmetry between the service requester and the service provider. Thus, the traditional matching between the service requester and the service provider is generally done through human agency. In a typical conventional matching, the human agency needs to confirm the service requirements with the service requester, and then directly choose a service provider to provide the related service. Therefore, the overall matching process is not transparent. In addition, the service providers have to provide their future available service time to the human agency in advance, and do not have much room to change the service time as their wish at any time, otherwise it may cause difficulty for the matching operation, or may upset the human agency. Under the conventional matching approach, the service providers are allowed less flexibility in scheduling, thereby degrading their quality of life as well as their service quality.

In addition, as it is difficult for the service provider to fully understand the detailed requirements of the service requester and, adding to that, the service requester is not allowed to choose the service provider by themselves, it often leads to gaps in the understanding of the service details between the service requester and the service providers, and consequently causes misunderstanding or unpleasant results.

This in mind, the present invention aims at providing a service requirement matching sub-system that allows the service requester and service provider to directly communicate with each other while providing the service provider with more flexibility in the use of time.

This is achieved by a service requirement matching sub-system according to claim 1 and related computer program product according to claim 8. The dependent claims pertain to corresponding further development and improvements.

As will be seen more clearly from the detailed description following below, the claimed service requirement matching sub-system includes a processing circuit arranged to operably execute the computer program product to conduct matching operations between the service requester and the service provider.

In the following, the invention is further illustrated by way of example, taking reference to the accompanying drawings. Thereof
FIG. 1 shows a simplified functional block diagram of a service brokering system according to one embodiment of the present disclosure,
FIG. 2 shows a simplified functional module diagram of a requirement matching program of the service requirement matching sub-system in FIG. 1 according to one embodiment of the present disclosure,
FIG. 3 shows a simplified flowchart of a first part of a requirement matching method according to one embodiment of the present disclosure,
FIG. 4 and FIG. 5 show simplified schematic diagrams of some operating screens of a service-provider device when conducting the operation in FIG. 3 according to one embodiment of the present disclosure,
FIG. 6 shows a simplified flowchart of a second part of the requirement matching method according to one embodiment of the present disclosure,
FIG. 7 through FIG. 9 show simplified schematic diagrams of some operating screens of a client device and a service-provider device when conducting the operation in FIG. 6 according to one embodiment of the present disclosure,
FIG. 10 shows a simplified flowchart of a third part of the requirement matching method according to one embodiment of the present disclosure,
FIG. 11 and FIG. 12 show simplified schematic diagrams of some operating screens of a client device and a service-provider device when conducting the operation in FIG. 10 according to one embodiment of the present disclosure,
FIG. 13 shows a simplified flowchart of a fourth part of the requirement matching method according to one embodiment of the present disclosure, and
FIG. 14 shows a simplified schematic diagram of some operating screens of a service-provider device when conducting the operation in FIG. 13 according to one embodiment of the present disclosure.

Reference is made in detail to embodiments of the invention, which are illustrated in the accompanying drawings. The same reference numbers may be used throughout the drawings to refer to the same or like parts, components, or operations.

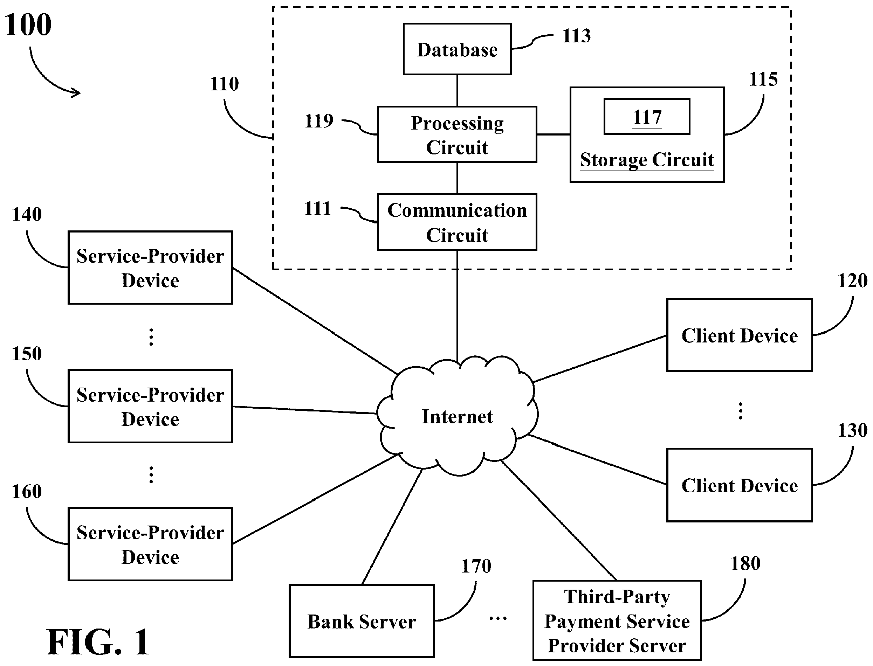

FIG. 1 shows a simplified functional block diagram of a service brokering system 100 according to one embodiment of the present disclosure. The service brokering system 100 comprises a service requirement matching sub-system 110, utilized for an online matching for the requesters and providers of various services.

For example, the service items that may be matched through the service brokering system 100 include but not limited to house cleaning services, body cleaning services, medical related services, catering services, body caring services, elderly companion caring services, babysitting services, air conditioner cleaning services, washing machine cleaning services, makeup and styling services, beauty and caring services, language teaching services, tutoring services, massage services, fitness instructing services, pet caring services, plumbing/electrical repairing services, painting services, various teaching services, various professional consultancy services, various errand services or the like.

The service requirement matching sub-system 110 may conduct data communications with devices manipulated by different service requesters (hereinafter referred to as "client devices", e.g., the exemplary client devices 120-130 shown in FIG. 1) through a network, and may conduct data communications with devices manipulated by different service providers (hereinafter referred to as "service-provider devices", e.g., the exemplary service-provider devices 140-160 shown in FIG. 1) through the network.

A user seeking to provide related services (hereinafter referred to as a "service provider") may manipulate a corresponding service-provider device to log in to the service requirement matching sub-system 110, and set or modify his/her service conditions. The service conditions needed to be set by the service provider may comprise one or more available service items, one or more acceptable service dates, one or more acceptable service hours, and one or more acceptable service regions, but the service provider does not need to set acceptable service dates and acceptable service hours so as to preserve greater flexibility in the use of time.

The foregoing available service items include but not limited to house cleaning services, body cleaning services, medical related services, catering services, body caring services, elderly companion caring services, babysitting services, air conditioner cleaning services, washing machine cleaning services, makeup and styling services, beauty and caring services, language teaching services, tutoring services, massage services, fitness instructing services, pet caring services, plumbing/electrical repairing services, painting services, various teaching services, various professional consultancy services, various errand services or the like.

The foregoing acceptable service hour may be configured on the basis of an hour or half-an-hour.

The foregoing acceptable service regions may be configured on the basis of county/city or town/village/district.

As for the user seeking to find a suitable service provider for the service (hereinafter referred to as the "client"), he/she may manipulate a corresponding client device to log in to the service requirement matching sub-system 110, and set or modify requirement conditions for the related service.

On the other hand, the service requirement matching sub-system 110 may conduct data communications with one or more bank servers (e.g., the exemplary bank server 170 shown in FIG. 1), and/or one or more third-party payment service providers' servers (e.g., the third-party payment service provider server 180 shown in FIG. 1) through the network so as to process relevant payments for clients and service providers who have been matched successfully.

As shown in FIG. 1, the service requirement matching sub-system 110 comprises a communication circuit 111, a database 113, a storage circuit 115, and a processing circuit 119.

The communication circuit 111 is arranged to operably conduct data communications with multiple client devices 120-130 and multiple service-provider devices 140-160 through the network. The foregoing network may be the internet or various suitable private networks.

The database 113 is arranged to operably store the basic information of multiple clients and multiple service providers. In addition, the database 113 is further arranged to operably store the requirement conditions set by respective clients, and the service conditions set by respective service providers.

For any user seeking to be the service provider recognized by the service requirement matching sub-system 110, the operation unit of the service requirement matching sub-system 110 may apply various evaluation methods to carry out assessments on the user's relevant service capability and to review the services provided by the user in the past so as to determine whether to accept the user as a service provider of the service brokering system 100. If, after evaluation, the operation unit of the service requirement matching sub-system 110 decides to accept the user as a service provider, the operation unit may further configure corresponding hourly rates of the service provider based on the user's professional competence, past service experience, service attitude, reviews from former clients, and various evaluation indicators, and then stores the user's hourly rate for respective services in the database 113.

The storage circuit 115 is arranged to operably store a requirement matching program 117. The processing circuit 119 is coupled with the communication circuit 111, the database 113, and the storage circuit 115, and arranged to operably execute the requirement matching program 117 to control the service requirement matching sub-system 110 to conduct a service requirement matching operation.

During the service requirement matching operation, the processing circuit 119 searches the database 113 for the service providers matching the requirement conditions set by clients. Then, the processing circuit 119 utilizes the communication circuit 111 to transmit relevant messages to the service-provider devices of related service providers in order to invite these service providers to discuss with the clients further on relevant service details.

In practice, each of the client device 120-130 and the service-provider device 140-160 shown in FIG. 1 may be realized with various devices that can be connected to the internet and are capable of executing browser programs or related application programs to log in to the service requirement matching sub-system 110 for further manipulations, such as a desktop computer, a laptop computer, a tablet computer, a smart phone, or other suitable devices. Each of the bank server 170 and the third-party payment service provider server 180 may be realized with one or more computer servers specifically configured for processing cashflow data.

Please note that the quantity of the client devices, the service-provider devices, the bank servers, and/or the third-party payment service provider servers shown in the description and the drawings of the present disclosure is merely for the convenience of description, rather than limiting the quantity of the foregoing devices or servers to specific numbers.

Different functional blocks of the foregoing service requirement matching sub-system 110 may be realized with separate hardware devices, or may be integrated into a single hardware device. In practice, the communication circuit 111 may be realized with various suitable circuits complying with relevant network communication protocols, wireless communication protocols, or mobile communication protocols, or may be realized with the communication modules of various cloud systems. The database 113 may be realized with multiple suitable database systems located in the same geographical region or in different geographical regions, connecting to each other through the internet, local area network, or dedicated data transmission cables. The storage circuit 115 may be realized with various suitable non-volatile storage devices. The processing circuit 119 may be realized with a single processor module, or may be realized with the combination of multiple processor modules located in the same geographical region or in different geographical regions, or may be realized with the computing modules of various cloud systems.

In some embodiments, different functional blocks of the service requirement matching sub-system 110 may be integrated into various cloud systems with powerful computing capability and scalability.

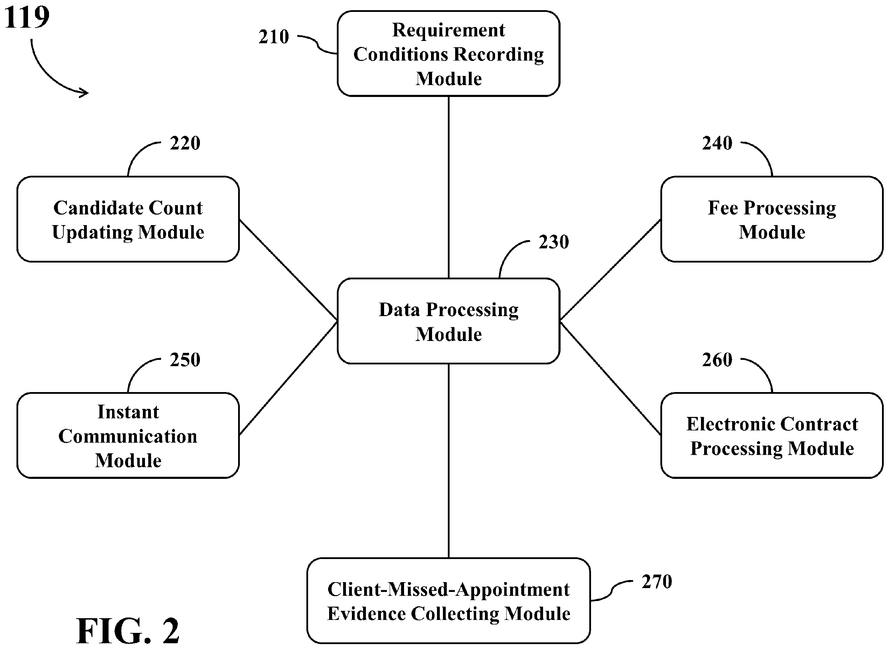

In addition, the requirement matching program 117 of the foregoing service requirement matching sub-system 110 may be realized with the computer program product formed by one or more functional modules. For example, FIG. 2 shows a simplified functional module diagram of the requirement matching program 117 of the service requirement matching sub-system 110 in FIG. 1 according to one embodiment of the present disclosure. In the embodiment of FIG. 2, the requirement matching program 117 comprises a requirement conditions recording module 210, a candidate count updating module 220, a data processing module 230, a fee processing module 240, an instant communication module 250, an electronic contract processing module 260, and a client-missed-appointment evidence collecting module 270.

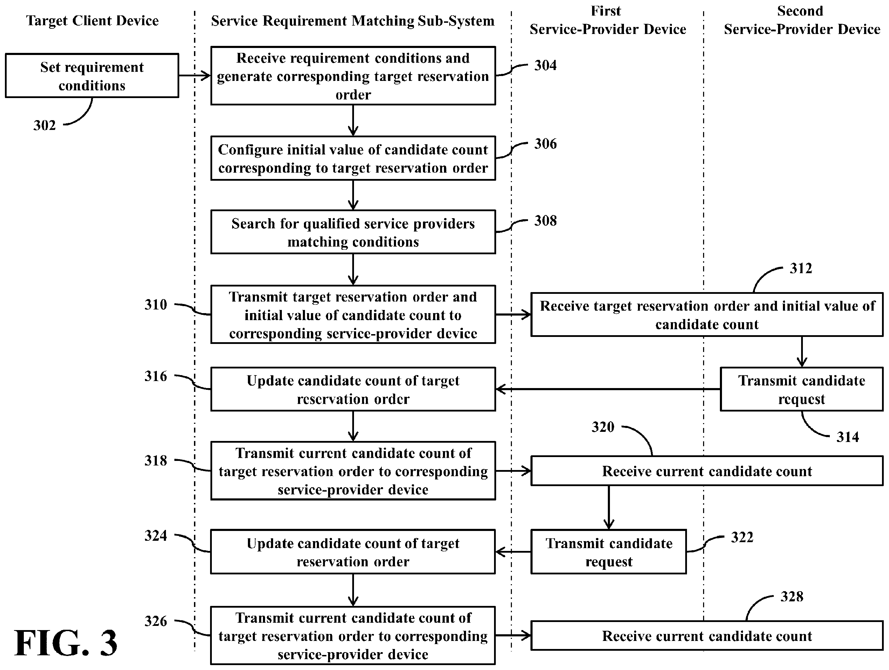

Different phases of the service requirement matching operation of the service brokering system 100 will be further described below with reference to FIG. 3 through FIG. 14.

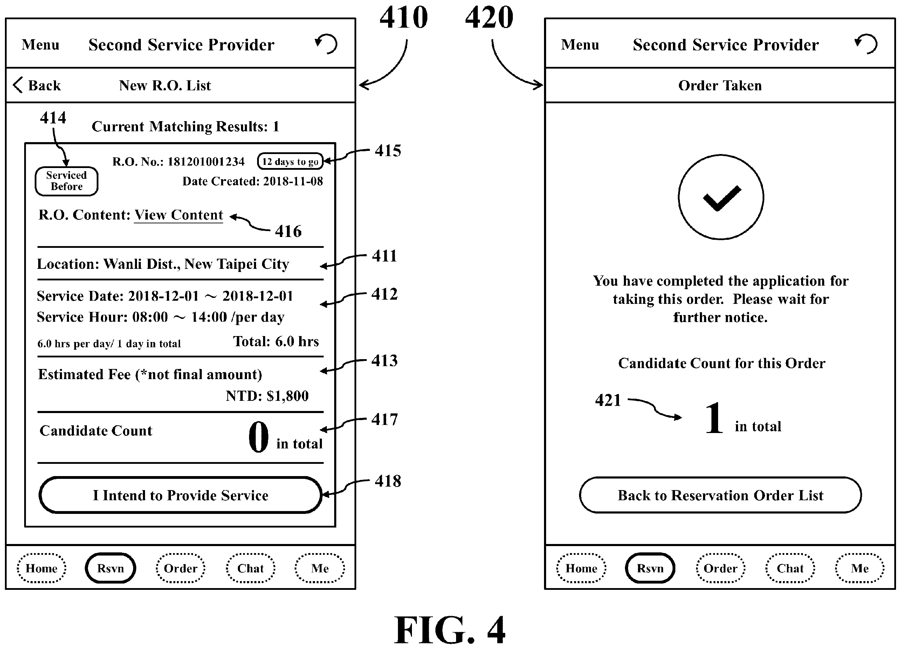

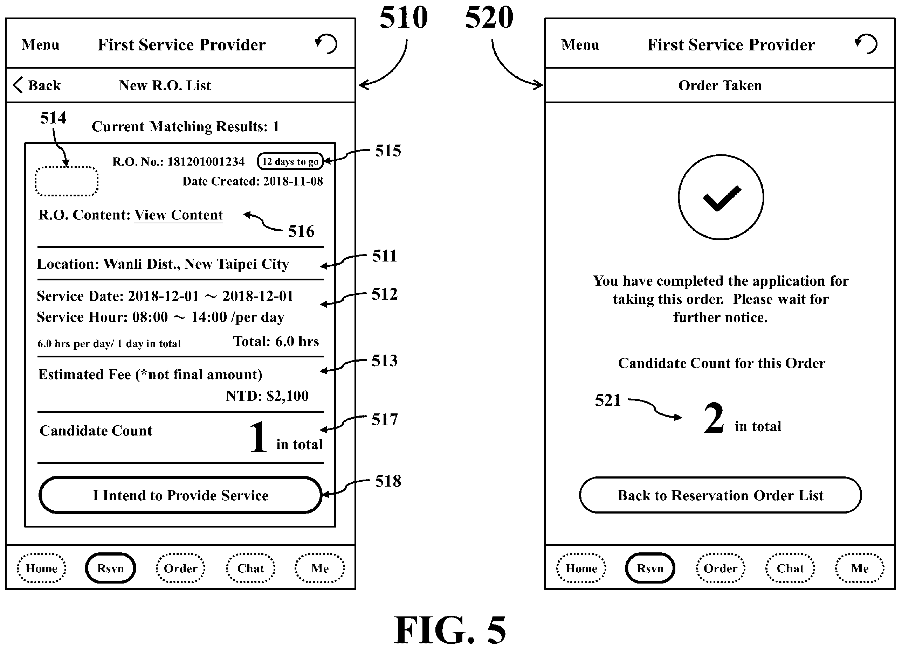

Firstly, please refer to FIG. 3 through FIG. 5. FIG. 3 shows a simplified flowchart of a first part of a requirement matching method according to one embodiment of the present disclosure. FIG. 4 and FIG. 5 show simplified schematic diagrams of some operating screens of a service-provider device when conducting the operations in FIG. 3 according to one embodiment of the present disclosure.

FIG. 3 describes the operation of forming a target reservation order (R.O.) and updating a candidate count conducted by the service requirement matching sub-system 110. In FIG. 3, operations within a column under the name of a specific device are operations to be performed by the specific device. For example, operations within a column under the label "target client device" are operations to be performed by one of the client devices; operations within a column under the label "service requirement matching sub-system" are operations to be performed by the service requirement matching sub-system 110; operations within a column under the label "first service-provider device" are operations to be performed by one of the service-provider devices; operations within a column under the label "second service-provider device" are operations to be performed by another service-provider devices; and so forth. The same analogous arrangement also applies to the subsequent flowcharts.

In operations, the processing circuit 119 of the service requirement matching sub-system 110 executes the requirement matching program 117 stored in the storage circuit 115 to conduct corresponding operations shown in FIG. 3 and in the subsequent flowcharts.

For the convenience of explanation, it is assumed hereinafter that the target client device is the client device 120 in FIG. 1, the first service-provider device is the service-provider device 140 in FIG. 1, the second service-provider device is the service-provider device 150 in FIG. 1. In addition, in the followings, the user manipulating the target client device 120 is referred to as the "target client", the user manipulating the first service-provider device 140 is referred to as the "first service provider", the user manipulating the second service-provider device 150 is referred to as the "second service provider", and the user manipulating the third service-provider device 160 is referred to the "third service provider".

When the target client wants to find a suitable person for a requested service (hereinafter referred to as "target service"), the target client may manipulate the target client device 120 to log in to the service requirement matching sub-system 110 and perform the operation 302 shown in FIG. 3.

In the operation 302, the target client device 120 may set the requirement conditions of the requested target service in the editing pages provided by the service requirement matching sub-system 110 according to the manipulation of the target client, and transmit the requirement conditions to the service requirement matching sub-system 110 through the network. The aforementioned requirement conditions may comprise an assigned service item, one or more assigned service dates, one or more assigned service hours, and an assigned service location. In some embodiments, the aforementioned requirement conditions may further comprise one or more assigned service targets, and the assigned service target may be the client him/herself, or relatives or other acquaintances of the client.

In the operation 304, the communication circuit 111 of the service requirement matching sub-system 110 may receive the requirement conditions of the target service transmitted from the target client device 120, and the requirement conditions recording module 210 of the requirement matching program 117 may control the processing circuit 119 to generate a reservation order (hereinafter referred to as "target reservation order") corresponding to the target service according to the received requirement conditions. In practice, the requirement conditions recording module 210 may control the processing circuit 119 to process partial information in the requirement conditions to avoid the leak of the client's detailed personal information from the target reservation order.

For example, if the requirement conditions transmitted from the target client device 120 comprise a full name of the client, the requirement conditions recording module 210 may record only the last name of the client on the target reservation order, rather than the full name of the client.

For another example, if the requirement conditions comprise a full name of the assigned service target, the requirement conditions recording module 210 may record only the last name of the assigned service target on the target reservation order, rather than the full name of the assigned service target.

For yet another example, if the requirement conditions comprise a full address of the assigned service location, the requirement conditions recording module 210 may record only the county/city and/or village/town/district name of the assigned service location on the target reservation order, rather than the full address of the assigned service location.

In the operation 306, the candidate count updating module 220 of the requirement matching program 117 may control the processing circuit 119 to set an initial value of candidate count corresponding to the target reservation order. In the present embodiment, the initial value of candidate count of the target reservation order is 0.

In the operation 308, the data processing module 230 of the requirement matching program 117 may control the processing circuit 119 to search the database 113 for service providers whose available service item and acceptable service region match the aforementioned requirement conditions as qualified service providers. For the convenience of explanation, it is assumed hereafter that the available service item and the acceptable service region of both the first service provider and the second service provider match the aforementioned requirement conditions, but the available service item or the acceptable service region of the third service provider does not match the aforementioned requirement conditions. In this situation, the data processing module 230 would choose only the first service provider and the second service provider as qualified service providers, and would not choose the third service provider as a qualified service provider.

In addition, in the operation 308, the fee processing module 240 of the requirement matching program 117 may control the processing circuit 119 to calculate each qualified service provider's estimated fee amount of providing the target service based on the respective hourly rate of each qualified service provider. In other words, each qualified service provider's estimated fee amount of providing the target service is generated by the fee processing module 240 in this embodiment, and not set by the target client.

In the operation 310, the data processing module 230 may control the communication circuit 111 to transmit the target reservation order and the initial value of candidate count to the service-provider devices corresponding to the aforementioned qualified service providers through the network, but not to service-provider devices corresponding to non-qualified service providers. For example, in the present embodiment, the communication circuit 111 transmits the target reservation order and the initial value of candidate count to the first service-provider device 140 corresponding to the first service provider and the second service-provider device 150 corresponding to the second service provider through the network, but not to the third service-provider device 160 corresponding to the third service provider. In addition, the data processing module 230 may control the communication circuit 111 to transmit each qualified service provider's estimated fee amount of providing the target service to the service-provider devices corresponding to the qualified service providers through the network.

Please note that in the aforementioned operations 308 and 310, the service requirement matching sub-system 110 does not need to match temporal conditions such as assigned service dates and assigned service hours, neither does it need to calculate non-qualified service provider's estimated fee amount of providing the target service. Furthermore, the communication circuit 111 does not need to transmit the target reservation order and the initial value of candidate count to the service-provider devices corresponding to non-qualified service providers. Therefore, the computing loading required for the processing circuit 119 can be effectively reduced, and the network band-width required for the data transmission of the communication circuit 111 can be effectively reduced as well.

In the operation 312, the service-provider device corresponding to each qualified service provider (e.g., the aforementioned first service-provider device 140 and the second service-provider device 150) receives the target reservation order and the initial value of candidate count transmitted from the service requirement matching sub-system 110. In addition, the service-provider device corresponding to each qualified service provider also receives the estimated fee amount transmitted from the service requirement matching sub-system 110.

Each qualified service provider may review the content of the target reservation order (R.O.) through the service-provider device to obtain relevant information of the requirement conditions of the target service and the estimated fee amount he/she can receive for taking the target service.

For example, in the embodiment of FIG. 4, the second service-provider device 150 may display a brief description of the target reservation order, the initial value of candidate count and the estimated fee amount into an operating screen 410.

In the operating screen 410, the message field 411 is arranged to operably display a county/city and village/town/district name of the assigned service location.

The message field 412 is arranged to operably display the assigned service date, the assigned service hour, and a total service hour calculated by the data processing module 230.

The message field 413 is arranged to operably display the estimated fee amount that the second service provider can receive for taking the target service.

The auxiliary message area 414 is arranged to operably display relevant indication messages, indicating whether the target client is a former client of the second service provider. In the present embodiment, it is assumed in this embodiment that the target client is the former client of the second service provider, thus the auxiliary message area 414 displays the indication message "serviced before" for the second service provider's reference.

The auxiliary message area 415 is arranged to operably display a day count between the current date and the assigned service date, as a reference for the second service provider to consider whether him/herself is available to take the target service.

The button 416 may be utilized by the second service provider to switch the current operating screen to a preview screen of the detailed content of the target reservation order. When the second service provider clicks the button 416, a predetermined application program or a browser program of second service-provider device 150 would switch the current operating screen 410 to the detailed content of the target reservation order, so that the second service provider can review it.

The message field 417 is arranged to operably display a current candidate count of the target reservation order, that is, a total count of service providers who have expressed an intention to provide the service described in the target reservation order (i.e., the target service) so far. In the present embodiment, the message field 417 of the operating screen 410 displays the initial value of candidate count (which is 0) transmitted from the service requirement matching sub-system 110.

If the second service provider has the intention to provide the service described in the target reservation order, he/she may click the button 418 of the operating screen 410. In this situation, the second service-provider device 150 conducts the operation 314 to transmit a candidate request (hereinafter referred to as a "first candidate request") to the service requirement matching sub-system 110 through the network.

In the operation 316, the communication circuit 111 receives the first candidate request transmitted from the second service-provider device 150. In this situation, the data processing module 230 may control the processing circuit 119 to configure the second service provider corresponding to the second service-provider device 150 as a service-provider candidate, and the candidate count updating module 220 may control the processing circuit 119 to update the candidate count of the target reservation order (i.e., the total count of service-provider candidates), so as to accumulate the current candidate count of the target reservation order to 1.

In the operation 318, the data processing module 230 controls the communication circuit 111 to transmit, in real-time, the current candidate count of the target reservation order to the service-provider devices corresponding to the aforementioned qualified service providers, but not to the service-provider devices corresponding to non-qualified service providers. For example, in the present embodiment, the communication circuit 111 may transmit the current candidate count of the target reservation order to the first service-provider device 140 and the second service-provider device 150 through the network, but not to the third service-provider device 160.

In the operation 320, the service-provider device corresponding to each qualified service provider (e.g., the aforementioned first service-provider device 140 and the second service-provider device 150) receives the current candidate count of the target reservation order transmitted from the service requirement matching sub-system 110. In this situation, the screen page displayed on the second service-provider device 150 would be switched from the operating screen 410 to the operating screen 420 of FIG. 4 to inform the second service provider of that he/she has completed the application for taking the target service. In the meantime, the current candidate count of the target reservation order transmitted from the service requirement matching sub-system 110 (which is 1 in this case) is also displayed on the message field 421 of the operating screen 420.

On the other hand, supposing that the first service provider did not utilize the first service-provider device 140 to review the content of the target reservation order until this time point, then the first service-provider device 140 may display the brief description of the target reservation order, the current candidate count, and the estimated fee amount into an operating screen 510 as shown in FIG. 5.

Most contents of the operating screen 510 are similar to that of the operating screen 410 displayed on the aforementioned second service-provider device 150. For example, contents of the message field 511, the message field 512, and the auxiliary message area 515, and the function of the button 516 of the operating screen 510 are the same as the corresponding objects in the aforementioned operating screen 410. Therefore, when the first service provider clicks the button 516, a predetermined application program or a browser program of the first service-provider device 140 would switch the current operating screen 510 to the detailed content of the target reservation order, so that the first service provider can review it.

However, in the present embodiment, it is assumed that the hourly rate of the first service provider is different from the aforementioned hourly rate of the second service provider, so the estimated fee amount displayed in the message field 513 is different from the estimated fee amount displayed in the message field 413 of the aforementioned operating screen 410.

In addition, in the present embodiment, it is assumed that the first service provider has never deliver services to the target client before, so the auxiliary message area 514 of the operating screen 510 may be blank and not display the indication message "serviced before".

In the embodiment of FIG. 5, the current candidate count of the target reservation order (which is 1) is displayed in the message field 517, which indicates that so far there is one service provider in total who has expressed the intention to provide the service described in the target reservation order (i.e., the target service).

As every service provider's time is valuable, therefore, while the first service provider is considering whether to express the intention to provide the target client the service, he/she may take the current candidate count displayed in the message field 517 into consideration. In this way, the matching efficiency can be increased.

If the first service provider has the intention to provide the service described in the target reservation order, he/she may click the button 518 of the operating screen 510. In this situation, the first service-provider device 140 conducts the operation 322 to transmit a candidate request (hereinafter referred to as a "second candidate request") to the service requirement matching sub-system 110 through the network.

In the operation 324, the communication circuit 111 receives the second candidate request transmitted from the first service-provider device 140. In this situation, the data processing module 230 may control the processing circuit 119 to configure the first service provider corresponding to the first service-provider device 140 as a service-provider candidate, and the candidate count updating module 220 may control the processing circuit 119 to update again the candidate count of the target reservation order so as to accumulate the current candidate count of the target reservation order to 2.

In the operation 326, the data processing module 230 controls the communication circuit 111 to transmit, in real-time, the current candidate count of the target reservation order to the service-provider devices corresponding to the aforementioned qualified service providers, but not to the service-provider devices corresponding to non-qualified service providers. In the present embodiment, the communication circuit 111 would transmit the most-updated current candidate count of the target reservation order to the first service-provider device 140 and the second service-provider device 150 through the network, but not to the third service-provider device 160.

In the operation 328, the service-provider device corresponding to each qualified service provider (e.g., the aforementioned first service-provider device 140 and the second service-provider device 150) receives the current candidate count of the target reservation order transmitted from the service requirement matching sub-system 110. In this situation, the screen page displayed on the first service-provider device 140 would be switched from the operating screen 510 to the operating screen 520 of FIG. 5 to inform the first service provider of that he/she has completed the application for taking the target service. In the meantime, the current candidate count of the target reservation order transmitted from the service requirement matching sub-system 110 (which is 2 in this case) is also displayed on the message field 521 of the operating screen 520.

Other qualified service providers of the service brokering system 100 may utilize the corresponding service-provider device to receive and review the content of the target reservation order, and to generate and transmit a candidate request to the service requirement matching sub-system 110 by applying the aforementioned manipulations conducted by the first service provider and the second service provider to express the intention to provide the service.

As can be appreciated from the foregoing descriptions, the service provider does not need to set acceptable service dates or acceptable service hours in advance in the service requirement matching sub-system 110. The service requirement matching sub-system 110 does not need to compare temporal conditions such as the assigned service date or the assigned service hour, neither does it need to calculate the estimated fee amount of providing the target service for other service providers who are not qualified service providers. Moreover, the service requirement matching sub-system 110 transmits the target reservation order and the corresponding candidate count only to the service-provider devices corresponding to the qualified service providers who match the requirement conditions, but not to other service-provider devices corresponding to non-qualified service providers.

Therefore, more flexible schedule and better flexibility in the use of time can be preserved for the service providers. Besides, the computing loading required for the processing circuit 119 can be effectively reduced as well. Moreover, the data throughput and the network band-width required for the communication circuit 111 can also be effectively reduced.

In addition, the service requirement matching sub-system 110 not only transmits the target reservation order to the corresponding service-provider devices, but also generates and transmits the current candidate count and the estimated fee amount of the target reservation order to the corresponding service-provider devices. As a result, while each qualified service provider is considering whether to express the intention to provide the target client the service, in addition to considering his/her schedule, he/she may also take the current candidate count and the estimated fee amount of the target reservation order into consideration, so that it saves the valuable time of the qualified service provider, thereby increasing the overall matching efficiency.

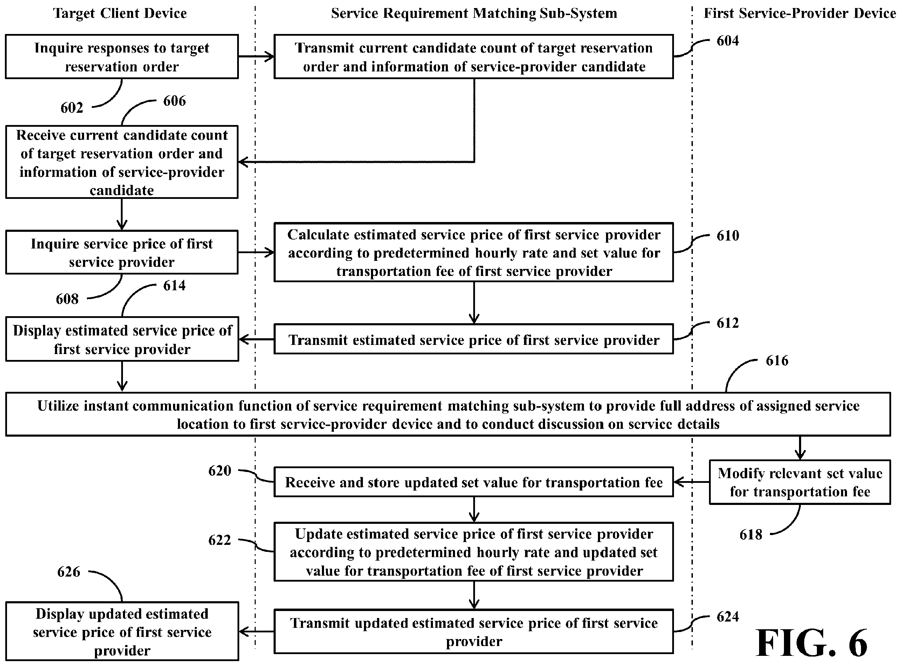

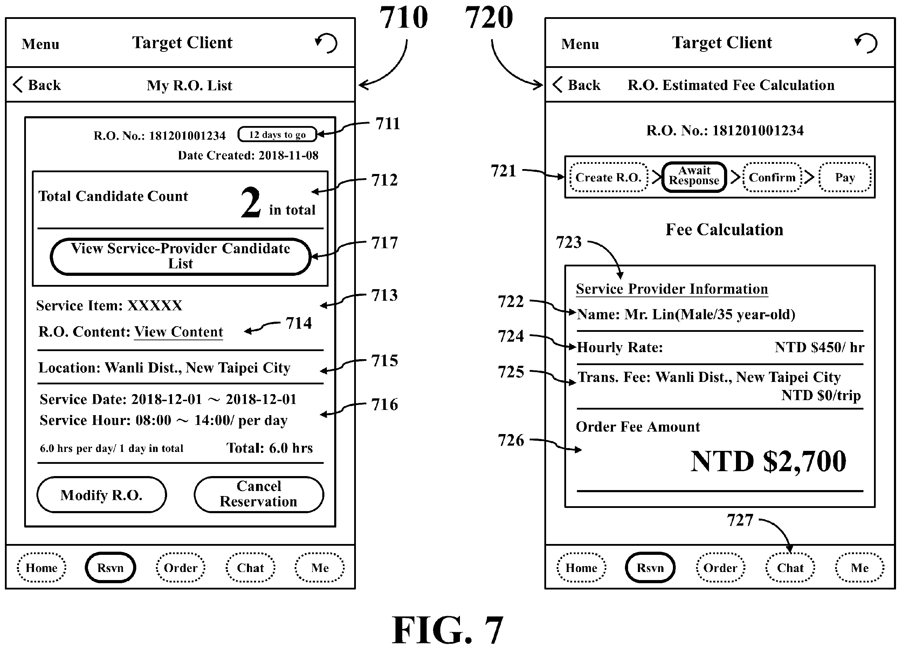

Next, please refer to FIG. 6 through FIG. 9. FIG. 6 shows a simplified flowchart of a second part of the requirement matching method according to one embodiment of the present disclosure. FIG. 7 through FIG. 9 show simplified schematic diagrams of some operating screens of a client device and a service-provider device when conducting the operations in FIG. 6 according to one embodiment of the present disclosure.

FIG. 6 describes operations of how the service requirement matching sub-system 110 establishes a contact channel between the target client and the qualified service provider, and modifies the estimated service price.

When the target client wants to review all responses to the target reservation order from the qualified service providers, he/she may manipulate the target client device 120 to make an inquiry. For example, the target client may click a specific button or link on the operating screen displayed by the target client device 120 to issue an inquiry command. In this situation, the target client device 120 would perform the operation 602 of FIG. 6 to transmit a corresponding reservation order inquiry request to the service requirement matching sub-system 110.

In the operation 604, the communication circuit 111 receives the reservation order inquiry request transmitted from the target client device 120. In this situation, the data processing module 230 would control the communication circuit 111 to transmit the current candidate count of the target reservation order and related information of service-provider candidates to the target client device 120 through the network. In the present embodiment, it is assumed that at this time only the first service provider and the second service provider are configured as service-provider candidates, thus the current candidate count transmitted from the communication circuit 111 to the target client device 120 is 2.

In the operation 606, the target client device 120 receives the current candidate count of the target reservation order and related information of service-provider candidates transmitted from the service requirement matching sub-system 110, and displays those data into an operating screen 710 as shown in FIG. 7.

In the operating screen 710, the auxiliary message area 711 is arranged to operably display a day count between a current date and the assigned service date.

The message field 712 is arranged to operably display the current candidate count of the target reservation order, that is, a total count of service providers who have expressed the intention to provide the service described in the target reservation order (i.e., the target service). In the present embodiment, the message field 712 displays the current candidate count as 2.

The message field 713 is arranged to operably display a name of the assigned service item.

The button 714 may be utilized by the target client to switch the current operating screen 710 to the preview screen of the detailed content of the target reservation order. When the target client clicks the button 714, the predetermined application program or the browser program of the target client device 120 would switch the current operating screen 710 to the detailed description of the target reservation order so that the target client can review it.

The message field 715 is arranged to operably display the county/city and village/town/district name of the assigned service location.

The message field 716 is arranged to operably display the assigned service date, the assigned service hour, and the total service hour calculated by the data processing module 230.

The button 717 may be utilized by the target client to switch the current operating screen 710 to the preview screen of a service-provider candidate list. When the target client clicks the button 717, the predetermined application program or the browser program of the target client device 120 would switch the current operating screen 710 to the service-provider candidate list (not illustrated in the drawings) for the target client to choose from.

When the target client wants to know the service price for a specific service-provider candidate to take the target service, he/she may click on the specific service-provider candidate in the list. In this situation, the target client device 120 would perform the operation 608 to transmit to the service requirement matching sub-system 110 a fee inquiry request corresponding to the specific service-provider candidate.

In the operation 610, the communication circuit 111 receives the fee inquiry request transmitted from the target client device 120. In this situation, the fee processing module 240 would control the processing circuit 119 to calculate the estimated service price for the specific service-provider candidate to take the target service according to a predetermined hourly rate and a set value for transportation fee of the specific service-provider candidate.

For the convenience of explanation, it is assumed that the target client inquires the service price of the first service provider. In this situation, the fee processing module 240 would control the processing circuit 119 to calculate the estimated service price for the first service provider to take the target service in the operation 610 according to the predetermined hourly rate and the set value for transportation fee of the first service provider. For example, the processing circuit 119 may multiply the predetermined hourly rate of the first service provider by the total service hour, and then add the calculation result with the set value for transportation fee for the region of the assigned service location set by the first service provider, so as to obtain the estimated service price for the first service provider to take the target service.

In the operation 612, the data processing module 230 controls the communication circuit 111 to transmit the estimated fee amount calculated by the processing circuit 119 to the target client device 120 through the network.

In the operation 614, the target client device 120 displays the estimated service price of the first service provider transmitted from the service requirement matching sub-system 110 into an operating screen 720.

In the operating screen 720, the progress field 721 is arranged to operably display a process stage of the target reservation order of the target client.

The message field 722 is arranged to operably display a name of the first service provider. In practice, the message field 722 may display only the name of the first service provider to avoid the leak of detailed personal information of the service provider during discussions between the client and the service provider.

The button 723 may be utilized by the target client to switch the current operating screen 720 to the preview screen of the information of the first service-provider candidate. When the target client clicks the button 723, the predetermined application program or the browser program of the target client device 120 would switch the current operating screen 720 to a more detailed information of the first service-provider candidate so that the target client can review it.

The message field 724 is arranged to operably display the predetermined hourly rate corresponding to the first service-provider candidate. The message field 725 is arranged to operably display the set value for transportation fee set by the first service-provider candidate for the region of the assigned service location. The message field 726 is arranged to operably display the aforementioned estimated fee amount calculated by the processing circuit 119. The button 727 may be utilized by the target client to initiate a function of an instant communication with the first service-provider candidate.

When the target client wants to have further discussion with the first service-provider candidate on details and related conditions of the target service, he/she may click the button 727 to initiate the instant communication function provided by the service requirement matching sub-system 110. In this situation, the target client device 120, the first service-provider device 140, and the service requirement matching sub-system 110 would perform the operation 616 of FIG. 6.

In the operation 616, the instant communication module 250 controls the processing circuit 119 to cooperate with the communication circuit 111 to collectively act as a communication mediator server, which enables the target client device 120 and the first service-provider device 140 to conduct the discussion or to transmit audio, image files or the like by utilizing the instant communication function provided by the service requirement matching sub-system 110.

As described in the foregoing, the target reservation order only records the county/city and/or village/town/district name of the assigned service location, rather than the full address of the assigned service location. Therefore, in the operation 616, the target client may utilize the target client device 120 to transmit the full address of the assigned service location to the first service-provider device 140 manipulated by the first service provider through the service requirement matching sub-system 110. In addition, the target client and the first service provider may utilize the aforementioned mechanism to further discuss relevant details and conditions of the target service.

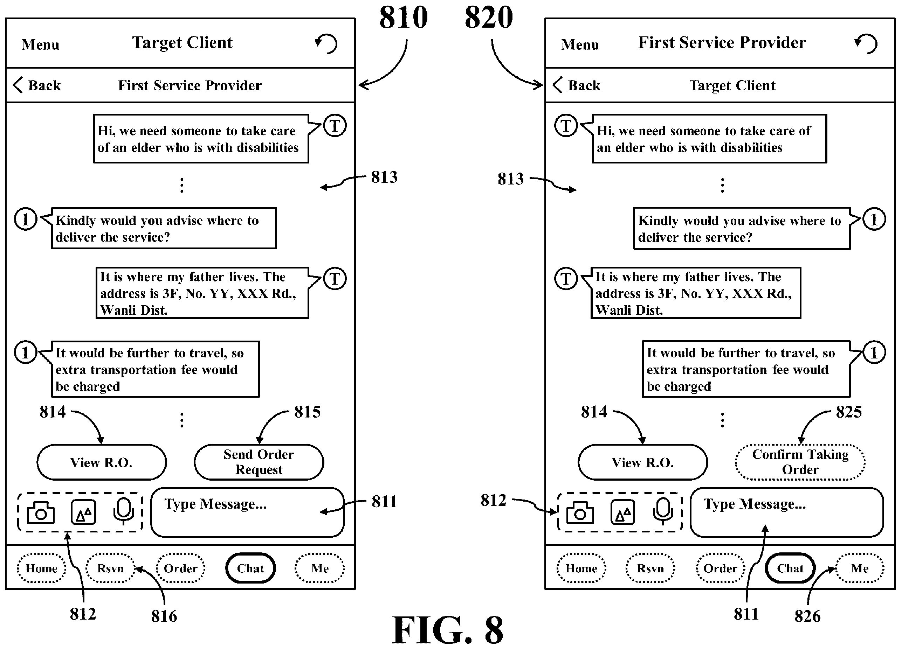

For example, in the embodiment of FIG. 8, the target client device 120 may display an operating screen 810 for the target client to manipulate, whereas the first service-provider device 140 may display an operating screen 820 for the first service provider to manipulate.

In the operating screens 810 and 820, the input field 811 is utilized for users to type in message texts to transmit to the opposing party. The buttons in functional button area 812 may be utilized by users to take photos, transmit photos, or record voice, so that relevant image files and/or audio files may be transmitted to the opposing party. The dialog area 813 may be utilized to display a history record of discussion between the target client and the first service provider. The button 814 may be utilized by the users to switch the current operating screen to the preview screen of the detailed content of the target reservation order.

The button 815 of the operating screen 810 may be utilized by the target client to transmit the order request to the first service provider. The button 825 of the operating screen 820 may be utilized by the first service provider to transmit an order confirmation message to the target client. Before the service requirement matching sub-system 110 receives a signal that the target client has clicked the button 815, the instant communication module 250 of the service requirement matching sub-system 110 continues instructing the first service-provider device 140 to configure the button 825 of the aforementioned operating screen 820 as disabled. For example, before the target client clicks the button 815 of the operating screen 810, the first service-provider device 140 may configure the button 825 of the operating screen 820 to be disabled, become non-triggerable, or even have the button 825 hidden.

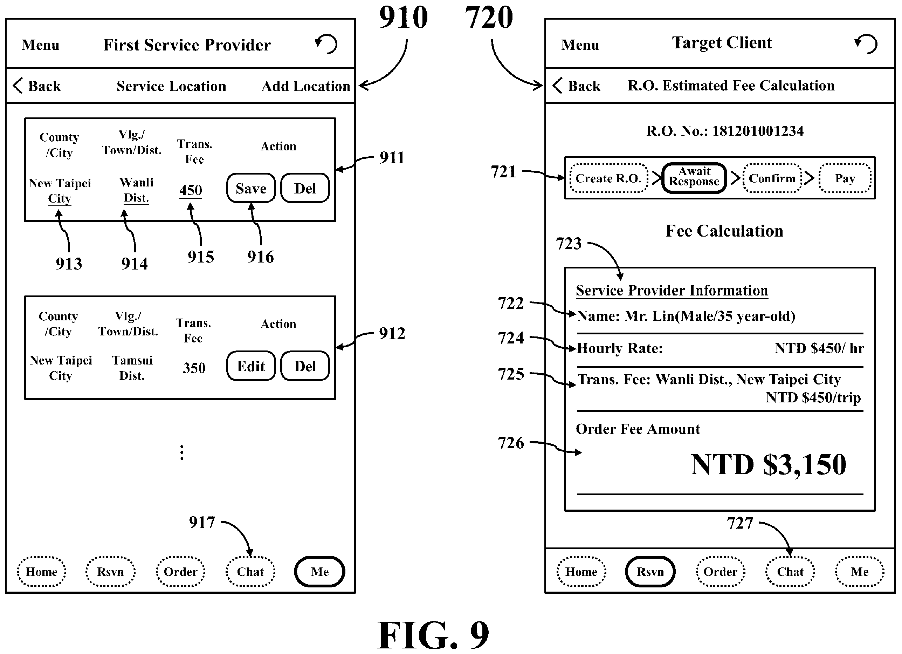

After the first service provider acquires the full address of the assigned service location, if he/she needs an extra charge for transportation fee, he/she may click the button 826 of the operating screen 820 shown in FIG. 8. In this situation, the first service-provider device 140 would switch the operating screen 820 to the operating screen 910 shown in FIG. 9 for the first service provider to edit a transportation fee for the region of the assigned service location.

In the operating screen 910, the message area 911 is arranged to operably display the transportation fee set by the first service provider for the region of the assigned service location. The message area 912 is arranged to operably display a transportation fee set by the first service provider for another region. The message field 913 is arranged to operably display the county/city name of the assigned service location. The message field 914 is arranged to operably display the village/town/district name of the assigned service location. The message field 915 is arranged to operably display a transportation fee set by the first service provider for the village/town/district of the assigned service location. As shown in FIG. 9, the first service provider may edit the content in the message fields 913, 914, and/or 915, and may click the button 916 to save the edited result.

In the operation 618, the first service-provider device 140 may modify a relevant set value for transportation fee according to the first service provider's editing actions conducted on the operating screen 910 and transmit an updated set value for transportation fee to the service requirement matching sub-system 110 through the network after the first service provider click the button 916.

After the set value for transportation fee is updated, the first service provider may click the button 917 of the operating screen 910 to return to the operating screen 820 where he/she conducts the discussion with the target client.

In the operation 620, the communication circuit 111 receives the updated set value for transportation fee transmitted from the first service-provider device 140. In this situation, the fee processing module 240 would control the processing circuit 119 to store the updated set value for transportation fee in the database 113.

In the operation 622, the fee processing module 240 controls the processing circuit 119 to update the estimated service price of the first service provider according to the predetermined hourly rate and the updated set value for transportation fee of the first service provider.

In the operation 624, the data processing module 230 controls the communication circuit 111 to transmit, in real-time, the updated set value for transportation fee and the updated estimated service price of the first service provider to the target client device 120 through the network.

After the target client device 120 receives the updated set value for transportation fee and the updated estimated service price of the first service provider, the target client may click the button 816 of the operating screen 810 of FIG. 8. In this situation, the target client device 120 would switch the operating screen 810 to the aforementioned operating screen 720, so that the target client may review it.

As shown in FIG. 9, in this situation the target client device 120 would perform the operation 626 to display the updated set value for transportation fee of the first service provider in the message field 725 of the operating screen 720, and to display the updated estimated service price of the first service provider in the message field 726 of the operating screen 720.

Therefore, the contents displayed in the message fields 725 and 726 of the operating screen 720 of FIG. 9 are different from the contents displayed in the corresponding fields of the operating screen 720 of FIG. 7.

When the target client finishes reviewing the estimated service price of the first service provider, he/she may click the button 727 of the operating screen 720 to return to the operating screen 810 to continue the discussion with the first service provider about other details or requirements.

As can be appreciated from the foregoing description, the service requirement matching sub-system 110 allows the service provider to modify or configure the set value for transportation fee relevant to the assigned service location after the service provider discussed with the client and obtained the full address of the assigned service location. Such mechanism not only significantly increases the service provider's flexibility in modifying the relevant service price but also prevents non-involved service providers from obtaining the full address of the assigned service location from the content of the target reservation order.

In other words, the aforementioned disclosure mechanism of service address can effectively ensure that the client's detailed personal information cannot be easily leaked.

In the operations, the target client may utilize the aforementioned instant communication function provided by the service requirement matching sub-system 110 to conduct the discussion with other service-provider candidates in addition to the first service-provider candidate, so as to find the most suitable service provider.

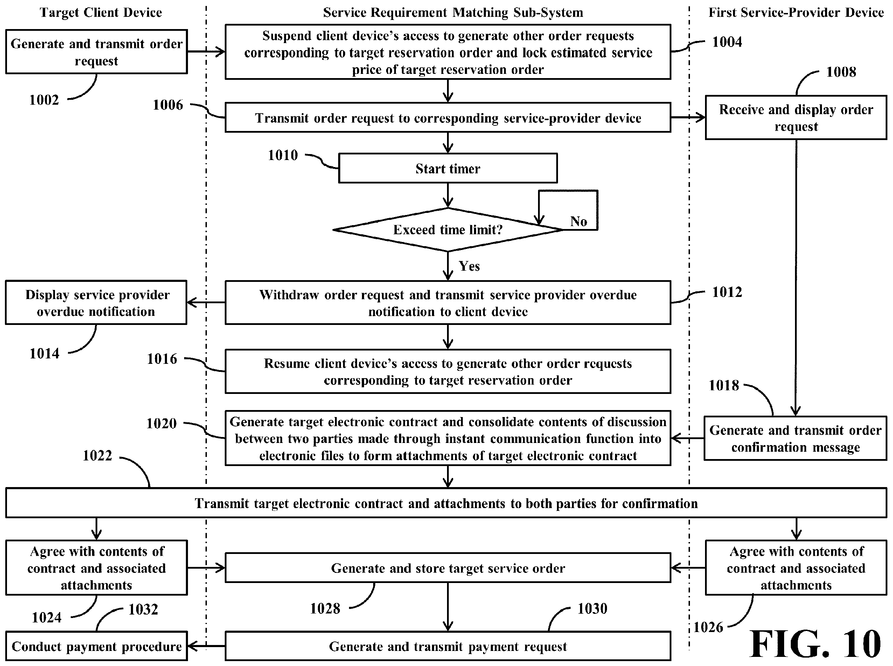

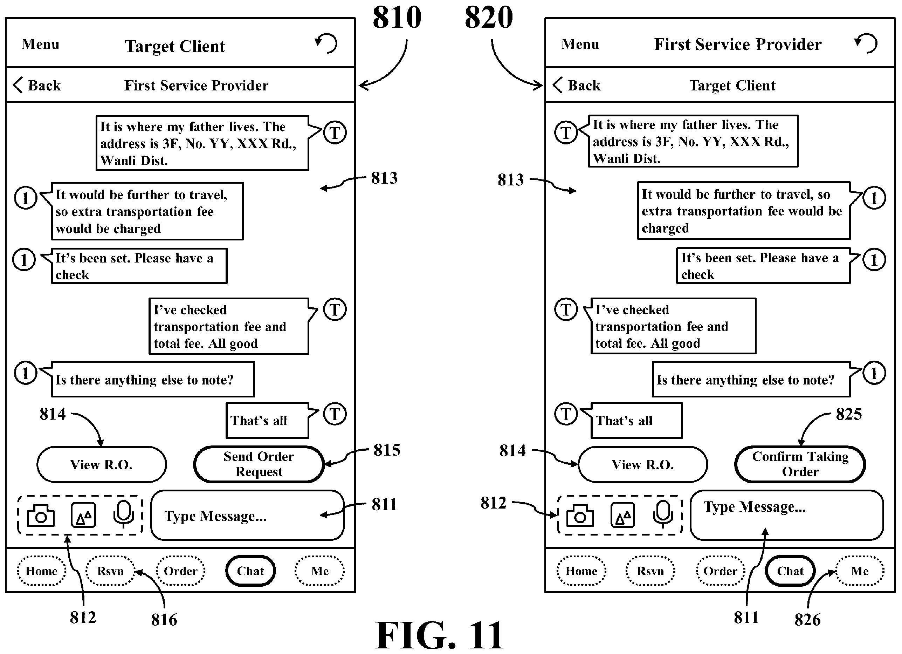

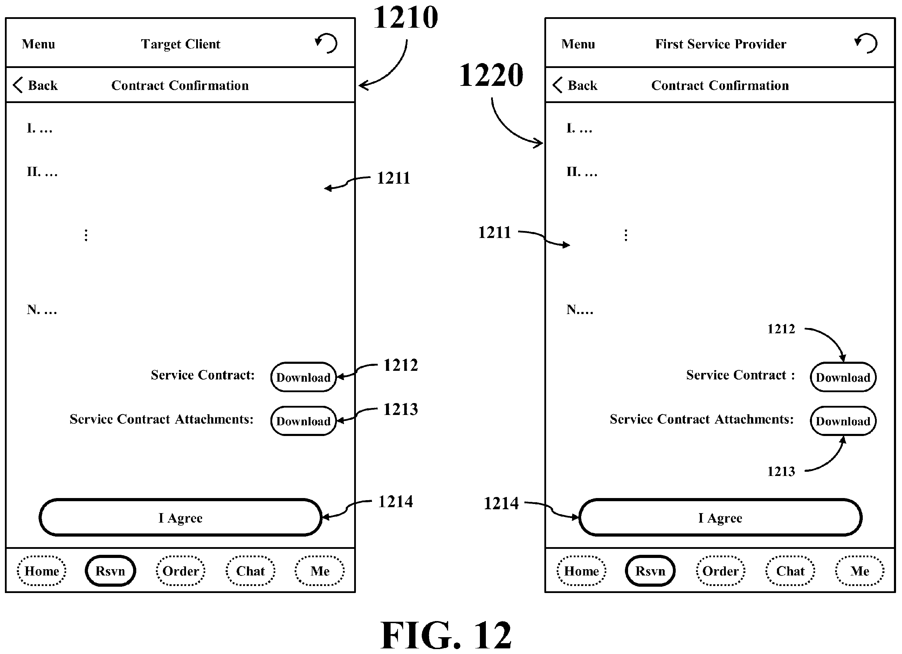

Next, please refer to FIG. 10 through FIG. 12. FIG. 10 shows a simplified flowchart of a third part of the requirement matching method according to one embodiment of the present disclosure. FIG. 11 and FIG. 12 show simplified schematic diagrams of some operating screens of a client device and a service-provider device when conducting the operation in FIG. 10 according to one embodiment of the present disclosure.

FIG. 10 shows operations of how the service requirement matching sub-system 110 generates the electronic contract between the client and the service provider and relevant service order.

As shown in FIG. 11, when the target client decides to hire the first service provider to provide the target service, he/she may click the button 815 of the operating screen 810 where he/she discusses with the first service provider. In this situation, the target client device 120 may perform the operation 1002 of FIG. 10 to generate an order request addressing to the first service provider and transmit the order request to the service requirement matching sub-system 110.

In the operation 1004, the communication circuit 111 receives the order request addressing to the first service provider and generated by the target client device 120. In this situation, the data processing module 230 would control the communication circuit 111 to transmit relevant controlling commands to the target client device 120 in order to instruct the target client device 120 to lock the estimated service price of the target reservation order and to suspend the target client device 120's access to generate other order requests corresponding to the target reservation order.

For example, the data processing module 230 may instruct the target client device 120 to configure all corresponding buttons 815 of the operating screens utilized to discuss with other service-provider candidates by the target client to be disabled. In this situation, the target client device 120 may configure the corresponding buttons 815 of the operating screens utilized to discuss with other service-provider candidates by the target client to be unable to click, to become non-triggerable, or even to have the button 815 hidden.

Since the aforementioned mechanism restrains the target client from transmitting the order request to multiple service providers in the same period of time, the target client can only transmit the order request to a single service provider. Accordingly, it prevents conflicting matching results from being generated by the service requirement matching sub-system 110.

In the operation 1006, the data processing module 230 utilizes the communication circuit 111 to transmit the aforementioned order request to the first service-provider device 140.

As shown in FIG. 11, after the first service-provider device 140 receives the order request transmitted from the service requirement matching sub-system 110, the first service-provider device 140 performs the operation 1008 to configure the button 825 of the operating screen 820 to be triggerable so as to display the order request transmitted from the target client.

After transmitting the order request to the first service-provider device 140, the data processing module 230 controls the processing circuit 119 to perform the operation 1010 to start a timer.

If the first service provider fails to confirm accepting the target client's order request within a specific time limit, the data processing module 230 would control the processing circuit 119 to perform the operation 1012 to withdraw the target client's order request transmitted to the first service provider. In this situation, the data processing module 230 may utilize the communication circuit 111 to transmit a service provider overdue notification to the target client device 120. In practice, the aforementioned specific time limit may be arranged to be a suitable length of time, such as 10 minutes, 15 minutes, or 30 minutes.

Then, the target client device 120 may perform the operation 1014 to display the service provider overdue notification so as to inform the target client of the situation.

In addition, the data processing module 230 further performs the operation 1016 to control the communication circuit 111 to transmit relevant controlling commands to the target client device 120 for instructing the target client device 120 to unlock the estimated service price of the target reservation order and to resume the target client device 120's access to generate other order requests corresponding to the target reservation order. In this situation, if the target client wants to hire another service-provider candidate (e.g., the aforementioned second service provider) to provide the target service, the target client may click the button 815 of the operating screen 810 where the target client discusses with the service-provider candidate. In this situation, the target client device 120 would generate an order request addressing to the second service provider and transmit the order request to the second service-provider device 150 through the service requirement matching sub-system 110.

On the other hand, if the first service provider decides to take the target service, he/she may click the button 825 of the operating screen 820 within the aforementioned specific time limit. In this situation, the first service-provider device 140 would perform the operation 1018 to generate and transmit a corresponding order confirmation message to the service requirement matching sub-system 110 in response to the aforementioned order request.

When the communication circuit 111 receives the order confirmation message transmitted from the first service-provider device 140, the electronic contract processing module 260 controls the processing circuit 119 to perform the operation 1020.

In the operation 1020, the processing circuit 119 generates a target electronic contract corresponding to both the target client and the first service provider, and consolidates contents of the discussion between two parties made through the instant communication function provided by the service requirement matching sub-system 110 into electronic files to form attachments of the aforementioned target electronic contract. In addition to text record, contents of the aforementioned electronic files may further comprise photo files, image files, and/or audio files transmitted to the opposing party during the discussion between the target client and the first service provider.

Then, in the operation 1022, the electronic contract processing module 260 utilizes the communication circuit 111 to transmit the target electronic contract and associated attachments to the target client device 120 and the first service-provider device 140, and requires the target client and the first service provider to confirm the target electronic contract and associated attachments.

As shown in FIG. 12, the target client device 120 may display the target electronic contract and the associated attachments into an operating screen 1210, and the first service-provider device 140 may display the target electronic contract and the associated attachments into an operating screen 1220.

In the operating screens 1210 and 1220, the message area 1211 is arranged to operably display the detailed terms of the target electronic contract. The button 1212 may be utilized by the user to download the electronic file of the target electronic contract for record. The button 1213 may be utilized by the user to download the electronic files of the associated attachments of the target electronic contract for record. The button 1214 may be utilized by the user to confirm accepting the content of the target electronic contract.

If the target client agrees with the contents of the target electronic contract and the associated attachments, he/she may click the button 1214 of the operating screen 1210. In this situation, the target client device 120 would perform the operation 1024 to generate and transmit a confirmation message corresponding to the target electronic contract and the associated attachments to the service requirement matching sub-system 110.

Similarly, if the first service provider agrees with the contents of the target electronic contract and the associated attachments, he/she may click the button 1214 of the operating screen 1220. In this situation, the first service-provider device 140 would perform the operation 1026 to generate and transmit a confirmation message corresponding to the target electronic contract and the associated attachments to the service requirement matching sub-system 110.

After the target client device 120 and the first service-provider device 140 both confirm the contents of the target electronic contract and the associated attachments, the electronic contract processing module 260 controls the processing circuit 119 to perform the operation 1028 to form a formal target service order corresponding to the target reservation order and to store the target service order in the database 113.

In the operation 1030, the electronic contract processing module 260 controls the processing circuit 119 to generate a payment request corresponding to a total service price of the target service order and to utilize the communication circuit 111 to transmit the payment request to the target client device 120.

Afterwards, the target client may utilize the target client device 120 to perform the operation 1032 so as to conduct relevant payment procedures.

In the operations, the processing circuit 119 may utilize the communication circuit 111 to conduct cashflow data communications with the bank server 170, and/or the third-party payment service provider server 180 through the network, so as to process the relevant payment procedures between the target client and the first service provider. In practice, the service requirement matching sub-system 110 may utilize various suitable payment mechanisms to fulfill the payment operation between the target client and the first service provider.

The aforementioned mechanism which utilizes the service requirement matching sub-system 110 to generate the target electronic contract and associated attachments is capable of simplifying the contract signing procedure between the client and the service provider. In addition, the aforementioned mechanism which automatically consolidates all records of the discussion between the client and the service provider into the attachments of the electronic contract can prevent both parties from having diverse impressions regarding the service content, the requirement conditions, and/or relevant details and fee amount in the future, thereby increasing the protection for both the client and the service provider.

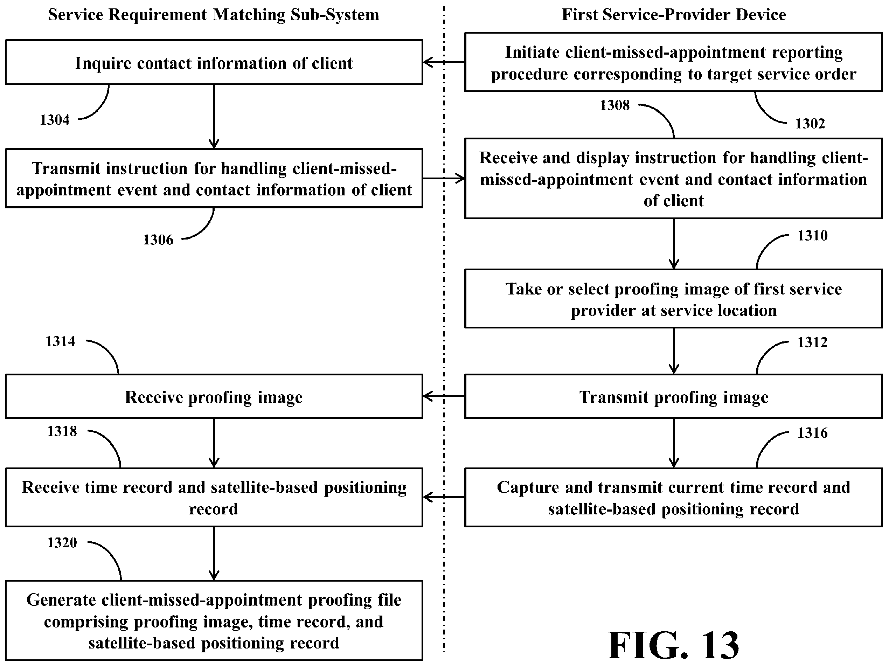

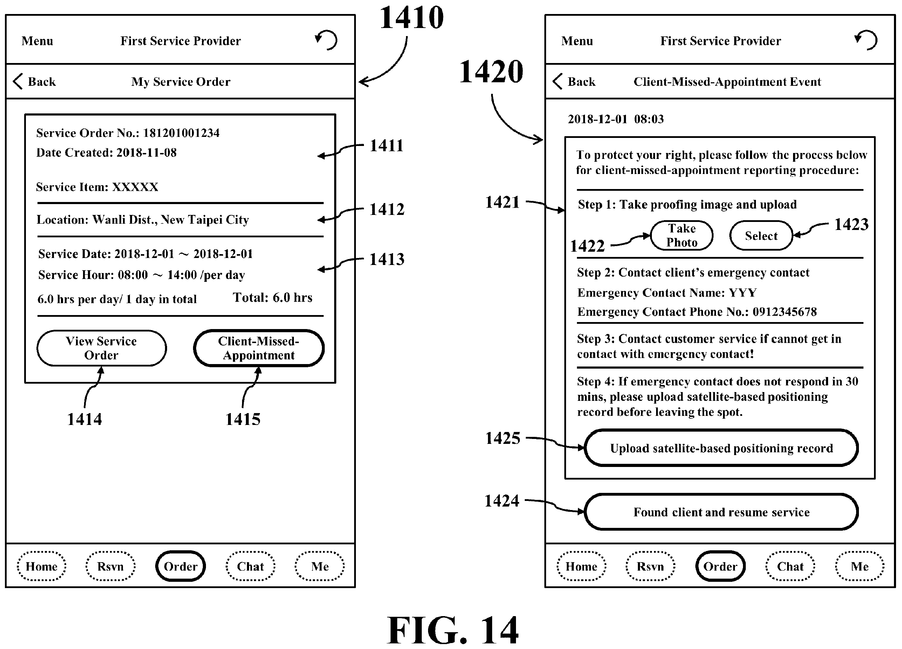

Next, please refer to FIG. 13 through FIG. 14. FIG. 13 shows a simplified flowchart of a fourth part of the requirement matching method according to one embodiment of the present disclosure. FIG. 14 shows a simplified schematic diagram of some operating screens of a service-provider device when performing the operation in FIG. 13 according to one embodiment of the present disclosure.

FIG. 13 shows operations of how the service requirement matching sub-system 110 establishes the evidence of a client-missed-appointment event for the service provider.

After the aforementioned first service provider and the target client are successfully matched, the first service provider needs to deliver the target service to the assigned service target at the assigned service location on the assigned service date.

However, in some occasions, it is possible that the first service provider arrives the assigned service location at an assigned service time but could not find the assigned service target or for some reasons could not get access to the assigned service location. These situations are hereinafter referred to as client-missed-appointment events. In order to protect the right of the service provider, the service requirement matching sub-system 110 may further establish relevant evidences of the client-missed-appointment event for the service provider, so that these evidences can be used as proofing materials for dealing with related dispute between the target client and the first service provider in the future.

When the first service provider encounters a client-missed-appointment event, the first service provider may utilize the first service-provider device 140 to make a report to the service requirement matching sub-system 110. For example, the first service-provider device 140 may display an operating screen 1410 as shown in FIG. 14 according to the manipulation of the first service provider, so that the first service provider may review the brief description of the target service order.

In the operating screen 1410, the message field 1411 is arranged to operably display the name of the assigned service item of the target service order. The message field 1412 is arranged to operably display the county/city and village/town/district name of the assigned service location. The message field 1413 is arranged to operably display the assigned service date, the assigned service hour, and the total service hour. The button 1414 may be utilized by the first service provider to switch the current operating screen to the preview screen of the detailed content of the target service order. The button 1415 may be utilized by the first service provider to initiate a client-missed-appointment reporting procedure.

When the client-missed-appointment event happens, the first service provider may click the button 1415 of the operating screen 1410. In this situation, the first service-provider device 140 would perform the operation 1302 to transmit an identification code of the target service order (e.g., the reference number of the target service order) and a client-missed-appointment event notification to the service requirement matching sub-system 110 through the network, so as to initiate a client-missed-appointment reporting procedure corresponding to the target service order.

When the communication circuit 111 receives the client-missed-appointment event notification and the identification code of the target service order transmitted from the first service-provider device 140, the client-missed-appointment evidence collecting module 270 controls the processing circuit 119 to perform the operation 1304 so as to inquire the contact information of the target client from the database 113.

Then, the client-missed-appointment evidence collecting module 270 utilizes the communication circuit 111 to perform the operation 1306 to transmit an instruction for handling the client-missed-appointment event and the contact information of the target client to the first service-provider device 140.

In the operation 1308, the first service-provider device 140 receives the instruction for handling a client-missed-appointment event and the contact information of the target client transmitted from the service requirement matching sub-system 110, and displays those data into an operating screen 1420 as shown in FIG. 14.

In the operating screen 1420, the message area 1421 is arranged to operably display the aforementioned instruction for handling the client-missed-appointment event and the contact information of the target client.

The first service provider may click the button 1422 or 1423 according to the instruction. In this situation, the first service-provider device 140 would perform the operation 1310 to take a proofing image of the first service provider at the assigned service location, or select a related proofing image according to the manipulation of the first service provider. The aforementioned proofing image may be one or more static pictures, or may be one or more video files.

Then, the first service-provider device 140 performs the operation 1312 to transmit the aforementioned proofing image to the service requirement matching sub-system 110.

In the operation 1314, the communication circuit 111 receives the proofing image transmitted from the first service-provider device 140.

In addition, the first service provider may try contacting an emergency contact of the target client, or the customer service of the operation unit of the service requirement matching sub-system 110, so as to find a solution for the first service provider to find the assigned service target.

If the first service provider finds the assigned service target within a predetermined time (e.g., 20 minutes or 30 minutes), and is able to provide the target service, the first service provider may click the button 1424 of the operating screen 1420. In this situation, the first service-provider device 140 may transmit a resume service notification to the service requirement matching sub-system 110, so that the client-missed-appointment evidence collecting module 270 stops tracking this client-missed-appointment event.

On the contrary, if the first service provider could not get in contact with the assigned service target within the predetermined time, the first service provider may click the button 1425 of the operating screen 1420. In this situation, the first service-provider device 140 would perform the operation 1316 to capture and transmit a current time record and a satellite-based positioning record to the service requirement matching sub-system 110.

In the operation 1318, the communication circuit 111 receives the time record and the satellite-based positioning record transmitted from the first service-provider device 140.

In the operation 1320, the client-missed-appointment evidence collecting module 270 controls the processing circuit 119 to generate a client-missed-appointment proofing file comprising the proofing image, the time record, and the satellite-based positioning record, and to store the client-missed-appointment proofing file in the database 113. As a result, when the first service provider claims remedies for breach of contract against the target client in the future, the client-missed-appointment proofing file can be used as an evidence before related mediation procedure, arbitration procedure, or court procedure to proof that the first service provider has confronted the client-missed-appointment event.

The aforementioned mechanism of utilizing the service requirement matching sub-system 110 to generate the client-missed-appointment proofing file can provide more objective proofing materials to reduce the first service provider's burden in collecting proofing evidence when having related dispute with the target client, thereby increasing overall protection for the service provider.

Please note that the executing order of the foregoing operations in each flowchart is merely an exemplary embodiment, rather than a restriction to the practical implementations.

For example, the executing order of the operation 306 and the operation 308 of FIG. 3 may be swapped. Alternatively, the operation 306 and the operation 308 may be performed at the same time.

For another example, the executing order of the operation 1012 and the operation 1016 of FIG. 10 may be swapped. Alternatively, the operation 1012 and the operation 1016 may be performed at the same time.

For yet another example, the executing order of the operation 1312 and the operation 1316 of FIG. 13 may be swapped. Alternatively, the operation 1312 and the operation 1316 may be performed at the same time.

In addition, the content, layout, and/or the presentation of information on the operating screen of each aforementioned embodiment may be modified according to the requirement of the practical applications. For example, in some embodiments, the auxiliary message area 414, 415, 514, 515, and/or 711 in the aforementioned operating screen may be omitted.

In some applications where the transportation fee does not require to be discussed case by case, the foregoing operations of modifying the set value for transportation fee may be omitted.

Certain terms are used throughout the description and the claims to refer to particular components. One skilled in the art appreciates that a component may be referred to as different names. This disclosure does not intend to distinguish between components that differ in name but not in function. In the description and in the claims, the term "comprise" is used in an open-ended fashion, and thus should be interpreted to mean "include, but not limited to." The term "couple" is intended to compass any indirect or direct connection. Accordingly, if this disclosure mentioned that a first device is coupled with a second device, it means that the first device may be directly or indirectly connected to the second device through electrical connections, wireless communications, optical communications, or other signal connections with/without other intermediate devices or connection means.

The term "and/or" may comprise any and all combinations of one or more of the associated listed items. In addition, the singular forms "a, " "an, " and "the" herein are intended to comprise the plural forms as well, unless the context clearly indicates otherwise.

Other embodiments of the invention will be apparent to those skilled in the art from consideration of the specification and practice of the invention disclosed herein. It is intended that the specification and examples be considered as exemplary only, with a true scope and spirit of the invention indicated by the following claims.

The invention is defined and limited only by the scope of appended claims.

## Claims

1. A service requirement matching sub-system (110), **characterized by** comprising:
a communication circuit (111), arranged to operably conduct data communications with multiple client devices (120-130) and multiple service-provider devices (140-160) through a network, wherein the multiple client devices (120-130) comprise a target client device (120), while the multiple service-provider devices (140-160) comprise a first service-provider device (140) and a second service-provider device (150);
a database (113), arranged to operably store service conditions set by respective users of the multiple service-provider devices (140-160);
a storage circuit (115), arranged to operably store a computer program product (117); and
a processing circuit (119), coupled with the communication circuit (111), the database (113), and the storage circuit (115), and arranged to operably execute the computer program product (117) to conduct following operations:
receiving requirement conditions transmitted from the target client device (120), and generating a corresponding target reservation order;
configuring an initial value of candidate count corresponding to the target reservation order;
searching the database (113) for multiple users matching the requirement conditions to be multiple qualified service providers, wherein the multiple qualified service providers comprise a first service provider corresponding to the first service-provider device (140), and a second service provider corresponding to the second service-provider device (150);
utilizing the communication circuit (111) to transmit the target reservation order and the initial value of candidate count to the first service-provider device (140) and the second service-provider device (150), but not to service-provider devices (160) corresponding to other users who do not match the requirement conditions;
when receiving a first candidate request transmitted from the second service-provider device (150), updating a candidate count of the target reservation order, and utilizing the communication circuit (111) to transmit, in real-time, a current candidate count of the target reservation order to the first service-provider device (140) and the second service-provider device (150); and
when receiving a second candidate request transmitted from the first service-provider device (140), updating again the candidate count of the target reservation order, and utilizing the communication circuit (111) to transmit, in real-time, the current candidate count of the target reservation order to the first service-provider device (140) and the second service-provider device (150).

2. The service requirement matching sub-system (110) of claim 1, **characterized in that** the service conditions set by the users of each service-provider device (140, 150) comprise one or more available service items and one or more acceptable service regions, but do not comprise acceptable service dates or acceptable service hour; the requirement conditions transmitted from the target client device (120) comprise an assigned service item, an assigned service date, an assigned service hour, and an assigned service location; and content of the target reservation order comprises the assigned service item, the assigned service date, the assigned service hour, and a region where the assigned service location is situated, but does not comprise a full address of the assigned service location.

3. The service requirement matching sub-system (110) of claim 2, **characterized in that** the processing circuit (119) is further arranged to operably execute the computer program product (117) to conduct following operations:
when the target client device (120) inquiries a service price of the first service provider, calculating an estimated service price of the first service provider based on a predetermined hourly rate and a set value for transportation fee of the first service provider; and
utilizing the communication circuit (111) to transmit the estimated service price to the target client device (120);
wherein the processing circuit (119) allows the first service-provider device (140) to modify the set value for transportation fee after the target client device (120) provides the first service-provider device (140) a specific service address through the service requirement matching sub-system (110).

4. The service requirement matching sub-system (110) of claim 3, **characterized in that** the processing circuit (119) is further arranged to operably execute the computer program product (117) to conduct following operations:
after the target client device (120) provides the first service-provider device (140) the specific service address through the service requirement matching sub-system (110), if the first service-provider device (140) modifies the set value for transportation fee, updating the estimated service price of the first service provider based on the predetermined hourly rate and an updated set value for transportation fee; and
utilizing the communication circuit (111) to transmit an updated estimated service price to the target client device (120).

5. The service requirement matching sub-system (110) of claim 2, **characterized in that** the processing circuit (119) is further arranged to operably execute the computer program product (117) to conduct following operations:
when receiving an order request generated by the target client device (120) and addressed to the first service provider, suspending the target client device (120)'s access to generate other order requests corresponding to the target reservation order, and locking the estimated service price of the target reservation order; and
utilizing the communication circuit (111) to transmit the order request to the first service-provider device (140).

6. The service requirement matching sub-system (110) of claim 2, **characterized in that** the processing circuit (119) is further arranged to operably execute the computer program product (117) to conduct following operations:
when receiving an order confirmation message transmitted from the first service-provider device (140) in response to the order request, generating a target electronic contract corresponding to the target reservation order, and consolidating contents of discussion between the target client device (120) and the first service-provider device (140) made through the service requirement matching sub-system (110) into one or more electronic files to form an attachment of the target electronic contract;
utilizing the communication circuit (111) to transmit the target electronic contract and the attachment to the target client device (120) and the first service-provider device (140) for confirmation; and
after contents of the target electronic contract and the attachment are confirmed by both the target client device (120) and the first service-provider device (140), forming a target service order corresponding to the target reservation order.

7. The service requirement matching sub-system (110) of claim 2, **characterized in that** the processing circuit (119) is further arranged to operably execute the computer program product (117) to conduct following operations:
when the first service-provider device (140) initiates a client-missed-appointment reporting procedure, utilizing the communication circuit (111) to transmit an instruction for handling a client-missed-appointment event to the first service-provider device (140);
receiving a proofing image from the first service-provider device (140);
receiving a time record and a satellite-based positioning record transmitted from the first service-provider device (140); and
generating a client-missed-appointment proofing file comprising the proofing image, the time record, and the satellite-based positioning record.

8. A computer program product (117), storing in a storage circuit (115) of a service requirement matching sub-system (110), enabling the service requirement matching sub-system (110) to conduct a service requirement matching operation, **characterized by** the service requirement matching operation comprising:
receiving requirement conditions transmitted from a target client device (120), and generating a corresponding target reservation order;
configuring an initial value of candidate count corresponding to the target reservation order;
searching a database (113) for multiple users matching the requirement conditions to be multiple qualified service providers, wherein the multiple qualified service providers comprise a first service provider corresponding to a first service-provider device (140), and a second service provider corresponding to a second service-provider device (150);
utilizing a communication circuit (111) to transmit the target reservation order and the initial value of candidate count to the first service-provider device (140) and the second service-provider device (150), but not to service-provider devices (160) corresponding to other users who do not match the requirement conditions;
when receiving a first candidate request transmitted from the second service-provider device (150), updating a candidate count of the target reservation order, and utilizing the communication circuit (111) to transmit, in real-time, a current candidate count of the target reservation order to the first service-provider device (140) and the second service-provider device (150); and
when receiving a second candidate request transmitted from the first service-provider device (140), updating again the candidate count of the target reservation order, and utilizing the communication circuit (111) to transmit, in real-time, the current candidate count of the target reservation order to the first service-provider device (140) and the second service-provider device (150).

9. The computer program product (117) of claim 8, **characterized in that** the database (113) is arranged to operably store service conditions set by respective users of the multiple service-provider devices (140-160), the service conditions set by the users of each service-provider device (140, 150) comprise one or more available service items and one or more acceptable service regions, but do not comprise acceptable service dates or acceptable service hour; the requirement conditions transmitted from the target client device (120) comprise an assigned service item, an assigned service date, an assigned service hour, and an assigned service location; and content of the target reservation order comprises the assigned service item, the assigned service date, the assigned service hour, and a region where the assigned service location is situated, but does not comprise a full address of the assigned service location.

10. The computer program product (117) of claim 9, **characterized in that** the service requirement matching operation further comprises:
when the target client device (120) inquiries a service price of the first service provider, calculating an estimated service price of the first service provider based on a predetermined hourly rate and a set value for transportation fee of the first service provider; and
utilizing the communication circuit (111) to transmit the estimated service price to the target client device (120);
wherein the processing circuit (119) allows the first service-provider device (140) to modify the set value for transportation fee after the target client device (120) provides the first service-provider device (140) a specific service address through the service requirement matching sub-system (110).

11. The computer program product (117) of claim 10, **characterized in that** the service requirement matching operation further comprises:
after the target client device (120) provides the first service-provider device (140) the specific service address through the service requirement matching sub-system (110), if the first service-provider device (140) modifies the set value for transportation fee, updating the estimated service price of the first service provider based on the predetermined hourly rate and an updated set value for transportation fee; and
utilizing the communication circuit (111) to transmit an updated estimated service price to the target client device (120).

12. The computer program product (117) of claim 9, **characterized in that** the service requirement matching operation further comprises:
when receiving an order request generated by the target client device (120) and addressed to the first service provider, suspending the target client device (120)'s access to generate other order requests corresponding to the target reservation order, and locking the estimated service price of the target reservation order; and
utilizing the communication circuit (111) to transmit the order request to the first service-provider device (140).

13. The computer program product (117) of claim 9, **characterized in that** the service requirement matching operation further comprises:
when receiving an order confirmation message transmitted from the first service-provider device (140) in response to the order request, generating a target electronic contract corresponding to the target reservation order, and consolidating contents of discussion between the target client device (120) and the first service-provider device (140) made through the service requirement matching sub-system (110) into one or more electronic files to form an attachment of the target electronic contract;
utilizing the communication circuit (111) to transmit the target electronic contract and the attachment to the target client device (120) and the first service-provider device (140) for confirmation; and
after contents of the target electronic contract and the attachment are confirmed by both the target client device (120) and the first service-provider device (140), forming a target service order corresponding to the target reservation order.

14. The computer program product (117) of claim 9, **characterized in that** the service requirement matching operation further comprises:
when the first service-provider device (140) initiates a client-missed-appointment reporting procedure, utilizing the communication circuit (111) to transmit an instruction for handling a client-missed-appointment event to the first service-provider device (140);
receiving a proofing image from the first service-provider device (140);
receiving a time record and a satellite-based positioning record transmitted from the first service-provider device (140); and
generating a client-missed-appointment proofing file comprising the proofing image, the time record, and the satellite-based positioning record.
